(19) Europäisches Patentamt

European Patent Office

Office européen des brevets

(11) **EP 1 225 323 B1**

(12) **EUROPEAN PATENT SPECIFICATION**

(45) Date of publication and mention
of the grant of the patent:
**16.03.2005 Bulletin 2005/11**

(51) Int Cl.[7]: **F02D 41/02**, F01N 11/00,
F02D 41/22

(21) Application number: **02001430.4**

(22) Date of filing: **21.01.2002**

(54) **Exhaust gas purifying device for internal combustion engine**

Abgasreinigungsvorrichtung für einen Verbrennungsmotor

Dispositif de purification de gaz d'échappement pour un moteur à combustion interne

(84) Designated Contracting States:
**DE FR**

(30) Priority: **22.01.2001 JP 2001013684**

(43) Date of publication of application:
**24.07.2002 Bulletin 2002/30**

(73) Proprietor: **TOYOTA JIDOSHA KABUSHIKI
KAISHA**
**Toyota-shi, Aichi-ken 471-8571 (JP)**

(72) Inventors:
• **Harada, Yasuo,**
**Toyota Jidosha Kabushiki Kaisha**
**Toyota-shi, Aichi-ken 471-8571 (JP)**

• **Ishiyama, Shinobu,**
**Toyota Jidosha Kabushiki Kaisha**
**Toyota-shi, Aichi-ken 471-8571 (JP)**

(74) Representative: **Pellmann, Hans-Bernd, Dipl.-Ing.**
**Tiedtke-Bühling-Kinne & Partner GbR,**
**TBK-Patent,**
**Bavariaring 4**
**80336 München (DE)**

(56) References cited:
**EP-A- 0 936 349        EP-A- 0 969 194**
**EP-A- 1 053 777        WO-A-98/55742**
**WO-A-99/31367        GB-A- 2 342 597**
**US-A- 6 073 440**

## Description

This invention relates to an exhaust gas purifying device according to the preamble of claim 1.

Generally, in a diesel engine or a lean burn gasoline engine, the engine operation zone for burning supplied with a high air-fuel ratio (lean burn environment) mixture has the majority of the entire engine operation.

Such engines (internal combustion engine) are provided with NOx absorption (NOx catalyst) which can absorb nitrogen oxides (NOx) under the lean burn environment in the exhaust system.

NOx catalyst has a characteristic that it absorbs NOx under the condition of a high oxygen concentration exhaust gas and discharges NOx under the condition of a low oxygen concentration exhaust gas. For example, the discharged NOx to the exhaust gas is quickly reacted with reducing component in the exhaust gas such as hydrogen carbide (HC) or carbon monoxide (CO) to be reduced to nitrogen ($N_2$), if such reducing component exists in the exhaust gas. The amount of NOx held or occluded in the NOx catalyst has a limit (saturation amount) and therefore, when the NOx catalyst already has occluded a large amount of NOx, the catalyst can not absorb NOx any further even if the exhaust gas includes a high oxygen concentration.

Accordingly, the internal combustion engine provided with NOx catalyst in the exhaust system executes reducing agent supply control which increases reducing component concentration in the exhaust gas by supplying a reducing agent in the exhaust system and at the same time reduces the oxygen concentration before the NOx occluded in the catalyst reaches a predetermined value. Thus it is popular that discharging and reducing purification of NOx occluded in the NOx catalyst and recovery of NOx absorbing capability of the NOx catalyst are repeated with a predetermined interval.

Normally the fuel in the internal combustion engine includes a sulfur component and in addition to NOx, sulfur oxides (SOx) originating from sulfur component in the fuel are included in the exhaust gas.

The SOx in the exhaust gas is absorbed by NOx catalyst with higher efficiency compared to the NOx and yet even under the condition that NOx occluded in the catalyst is discharged (under the condition that the oxygen concentration in the exhaust gas is less than the predetermined level), the SOx will not be easily discharged. Accordingly, continued engine operation may gradually accumulate the SOx in the exhaust gas in the catalyst to generate a so called SOx poisoning condition. Use for a long time period or use by a particular operation condition may accumulate hydrogen carbide (HC) in the exhaust gas on the surface of the NOx catalyst to form a film of HC.

The deterioration of the NOx catalyst such as SOx poisoning, heat deterioration or HC film generation may lead to reduction of acceptable value of NOx occlusion, or NOx absorption efficiency of the catalyst and eventually reduce the purification efficiency of NOx. If such deterioration should be noticed, it is preferable to properly countermeasure by accurately and quickly recognizing the fact of generation of such deterioration.

As disclosed for example, in a Japanese Patent Application Laid-open No. JP-2000-104536, an exhaust gas purifying device includes an NOx sensor at the downstream of the NOx catalyst provided in the exhaust system to detect the NOx concentration of the exhaust gas at the downstream of the catalyst. As the NOx occluded in the NOx catalyst approaches the saturation amount, the absorption efficiency of the NOx by the catalyst becomes decreased and the amount of NOx passing through the catalyst increases. Accordingly, when the detected NOx concentration is gradually increased to reach and exceed a predetermined upper limit (hereinafter called as set upper limit value), it is determined that the NOx occluded in the NOx catalyst has reached the saturation amount and execute reducing agent supply control to discharge and purify by reducing the NOx occluded in the catalyst by repeating periodically. Further, the device in the patent publication measures the time (interval) that the detected NOx concentration exceeds the set upper limit value again after the execution of the NOx discharge and purification by reducing.

If the time measured becomes shorter than a predetermined time, it is considered that the NOx catalyst is deteriorated and the purification efficiency is reduced. Then any proper procedure is taken. As described, a series of process for determining the deterioration and its level of NOx catalyst is hereinafter called as a determination of NOx catalyst deterioration.

Thus, by using a device such as NOx sensor which can detect the NOx concentration change in the exhaust gas with time change to confirm the NOx concentration of the exhaust gas at the downstream of the NOx catalyst and observing the NOx concentration change controlled by feed back control to adjust the reducing component in the exhaust gas flown into the NOx catalyst based on the confirmed NOx concentration, it can accurately confirm the deterioration of the NOx catalyst or the level of deterioration thereof.

It is necessary to keep the catalyst in activation condition for the NOx catalyst for fully function the reducing and purification performance. For example, NOx catalyst can be said to be in activation when the temperature thereof (or the environmental temperature in which the catalyst is exposed) is within a predetermined range (catalyst activation area). For this reason, an exhaust gas purifying device for an internal combustion engine using NOx catalyst will not execute the reducing agent supply control if the temperature of the catalyst is not within the catalyst activation area.

When the condition that the reducing agent supply control is not executed continues, the NOx is continued to be absorbed in the catalyst and large amount of NOx may be accumulated in the catalyst. Under such condition if the temperature of the catalyst reaches to the catalyst activation area and the reducing agent supply control is executed immediately after the temperature changes to the activation area, large amount of the NOx may be discharged from the catalyst compared to the case that the reducing agent supply control is periodically executed (the case that the temperature of the catalyst is within the activation area). If such extra amount of NOx is discharged, the NOx without being purified or reduced in the catalyst and flown to the downstream of the catalyst increases temporarily and the detected NOx change at the downstream of the catalyst is different from the normal condition that the reducing agent supply control is periodically executed. Under such condition, if the deterioration determining for NOx is performed, it may lead to an erroneous determination.

As described in the conventional device, for the feed back control that adjusts the reducing component in the exhaust gas flown into the NOx catalyst based on the NOx concentration being confirmed at the downstream of the catalyst, it is a precondition that the detected NOx concentration at the downstream of the catalyst should be accurately affecting the supply amount of reducing agent to the catalyst.

However, if the condition that the reducing agent supply control is not executed continues, the NOx concentration change flown to the downstream of the NOx catalyst becomes different from the condition that the reducing agent supply control is normally executed. This will make difficult to hold a high catalyst efficiency or purification efficiency by the feed back control.

EP-A-0 936 349 discloses a generic exhaust gas purifying device for an internal combustion engine, comprising an NOx catalyst provided in an exhaust system of the internal combustion engine for occluding NOx when a reducing component concentration in an exhaust gas flowing in the exhaust system is low and discharging and reducing the occluded NOx when the reducing component concentration in the exhaust gas flowing in the exhaust system becomes high; an NOx detecting means for detecting the NOx concentration in the exhaust gas flowing in the downstream of the NOx catalyst, a control means for controlling a predetermined control based on the detected NOx concentration, a reducing agent supply means for supplying a reducing agent into the exhaust gas flowing through the NOx catalyst; and a supply period deciding means for deciding a supply period of the reducing agent by the reducing agent supply means and a non-supply period of the reducing agent by the reducing agent supply means.

Further exhaust gas purifying devices are known from US-6 073 440 A, EP-0 969 194 A and GB-2 342 597 A.

It is the object of the present invention, to provide a exhaust gas purifying device for an internal combustion engine, where the NOx is not continued to be absorbed in the catalyst and a large amount of NOx may be accumulated in the catalyst, when a condition that the reducing agent supply control is not executed continues because the temperature of the catalyst is not within the catalyst activation area.

This object is solved by the exhaust gas purifying device for an internal combustion engine having the features of claim 1.

The invention is further developed as it is defined in the dependent claims.

When the amount of NOx occluded in the NOx catalyst by the continuation of the condition that the reducing agent is not supplied, the NOx amount (discharging ratio) discharged from the NOx catalyst when the reducing agent is supplied become larger than the NOx amount (reducing and purification ratio) to be reduced and purified. Under this condition, when the supply of the reducing agent is made, a part of the NOx discharged from the NOx catalyst flows to the downstream of the NOx catalyst without being reduced or purified and such NOx may influence on the detected NOx concentration.

According to the above structure, the supply of the reducing agent relative to the NOx catalyst is made periodically with a predetermined value. When the NOx occluded value in the catalyst is within a predetermined range, the NOx concentration is used as a parameter to accurately reflect the occluded NOx amount and is fed back to the reducing agent supply condition (feed back control). On the other hand, when the reducing agent is supplied and a part of the discharged NOx flows to the downstream of the NOx catalyst without being reduced or purified to influence on the NOx concentration to be detected, in such case, a predetermined amount of the reducing agent is supplied to the NOx catalyst according to a preset condition and with a predetermined timing.

Even when the reducing agent is not supplied to change the NOx occlusion amount in the NOx catalyst, this structure can assure the stable purification function of the NOx catalyst.

It is preferable that the control of the control prohibiting means is released when the detected NOx concentration is below the predetermined value.

After the release of the control prohibiting means, the control of prohibiting the control of the control means and the control of supplying the reducing agent to the reducing agent supply means based on the predetermined condition are no more executed. Then the device return to the control of the control means for controlling the supply operation of the reducing agent by the reducing agent supply means.

The phenomenon that the NOx amount discharged upon supply of the reducing agent to the NOx catalyst exceeds the NOx amount reduced and purified is effectively associated with the reduction of the NOx concentration detected upon the reducing agent being supplied.

According to the structure above, when the minimum value of NOx concentration detected upon supply of reducing agent is smaller than the predetermined value, the control of the control prohibiting means is released and the feed back control is prohibited for a sufficient time until the possibility of control interruption disappears. It can properly control by selecting accurately the proper control based on the NOx catalyst condition (NOx occlusion amount).

The exhaust gas purifying device may further includes a NOx occlusion estimating means for estimating the amount of NOx occlusion in the NOx catalyst, and a period deciding means for deciding the predetermined period for the control of the control prohibiting means based on the estimated NOx occlusion amount.

By supplying the reducing agent to the NOx catalyst, the period of influencing on the detected NOx concentration discharged from the NOx catalyst and a part thereof being flowing to the downstream of the NOx catalyst without being reduced or purified is associated with the NOx amount occluded in the NOx catalyst.

In the above aspects, the control means may determine that NOx catalyst has been in the deterioration state if a minimum value of the detected NOx concentration exceeds a predetermined upper limit value.

Fig. 1 is a schematic view of a diesel engine system according to an embodiment of the present invention;

Fig. 2 is a time chart showing a change of NOx concentration detected at the downstream of the catalyst upon fuel supply control;

Fig. 3 is a graph showing a relation between exhaust temperature Tex and an activation of the catalyst;

Fig. 4 is a graph showing the occlusion amount of the NOx in the catalyst under a different condition;

Fig. 5 is a time chart showing a change of NOx concentration in different catalysts detected at the downstream of each catalyst after the fuel being supplied ;

Fig. 6 is a flow chart showing the fuel supply procedure according to the embodiment of the invention; and

Fig. 7 is a flow chart showing recovery procedure for SOx poisoning condition according to the embodiment of the invention.

DETAIL DESCRIPTION OF THE PREFERRED EMBODIMENTS

(First embodiment)

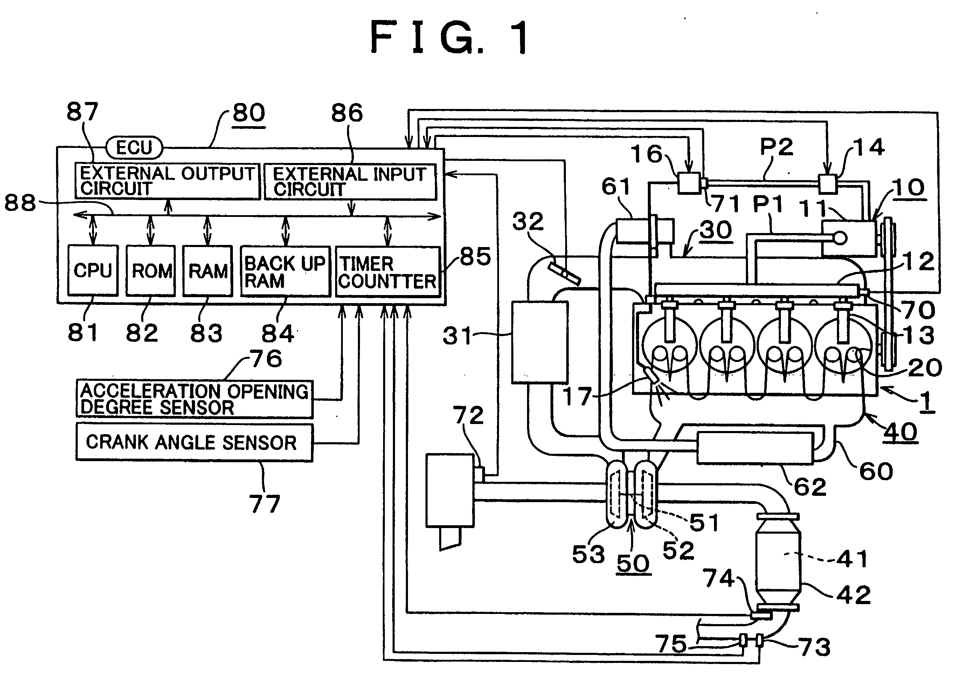

Referring now to an exhaust gas purifying device for an internal combustion engine according to an embodiment of the present invention applied to a diesel engine system, in Fig. 1 internal combustion engine 1 (hereinafter referred as just an engine) is a diesel engine system of four cylinders in series includes mainly a fuel supply system 10, combustion chamber 20, intake system 30 and exhaust system 40.

First, the fuel supply system 10 includes a supply pump 11, common rail 12, fuel injection valves 13, cut-off valve 14, modulating valve 16, fuel supply nozzle 17, engine fuel passage P1 and fuel supply passage P2.

The supply pump 11 suctions fuel from a fuel tank (not shown) and pressurizes the fuel to a high pressure and supplies to the common rail 12 via the engine fuel passage P1. The common rail 12 functions to keep (accumulate) the high pressure fuel supplied from the supply pump 11 to a predetermined pressure level and this accumulated pressurized fuel is delivered to each fuel injection valve 13. The fuel injection valve 13 is a solenoid type valve having an electromagnetic coil (not shown) therein. The fuel injection valve 13 injects the fuel into the combustion chamber 20 by opening operation.

On the other hand, the supply pump 11 supplies a part of the fuel from the fuel tank to the fuel supply nozzle 17 via the fuel supply passage P2. The fuel supply passage P2 is provided with the cut-off valve 14 and modulating valve 16 in order from the supply pump 11 side to the fuel supply nozzle 17. The cut-off valve 14 interrupts the fuel supply passage P2 to stop fuel supply upon emergency. The modulating valve 16 controls the fuel pressure (burning pressure) supplied to the fuel supply nozzle 17. The fuel supply nozzle 17 is an open/close valve of mechanical type and injects the fuel into the exhaust system 40 by opening when the fuel pressure reaches a predetermined value (for example, 0.2MPa). A desired fuel is injected to be supplied from the fuel supply nozzle 17 by controlling the fuel pressure at the upstream of the fuel supply nozzle 17 with a proper timing.

Intake system 30 forms a passage (suction passage) for the air supplied to each combustion chamber 20. The exhaust system 40 forms an exhaust passage for exhaust gas discharged from each combustion chamber 20.

The engine 1 is provided with a well known turbo charger 50 and the turbo charger 50 is provided with a turbine wheel 52 and a compressor wheel 53 connected to each other via a shaft 51. The compressor wheel 53 (intake side compressor wheel) is exposed to the intake gas in the intake system 30 and the turbine wheel (exhaust side turbine wheel) is exposed to the exhaust gas in the exhaust system 40. The turbo charger 50 thus structured performs a pressure charging by rotating the intake side compressor wheel 53 to charge the suction pressure by utilizing an exhaust gas flow (exhaust gas pressure) received by the exhaust side turbine wheel 52.

In the intake system 30, an intercooler 31 provided in the turbo charger 50 compulsively cools the suction air which has been heated by the pressure charging. Throttle valve 32 provided downstream of the intercooler 31 is an electronically controlled open/close valve which can linearly control the opening degree and under a predetermined condition, the flow area of suction air is throttled to adjust the supply amount of the suction air.

The engine 1 is provided with an exhaust gas re-circulation passage (EGR passage) 60 which bypasses the upstream (intake system 30) and downstream (exhaust system 40) of the combustion chamber 20. This EGR passage 60 functions to return a part of the exhaust gas to the intake system 30. The EGR passage 60 includes an EGR valve 61 for freely adjusting the exhaust gas amount flowing through the passage controlled to be linearly open and close by electronic control and an EGR cooler 62 for cooling the exhaust gas recirculating the EGR passage 60.

In the exhaust system 40, a catalyst housing 42 is provided at the downstream of connection portion of the exhaust system 40 and the EGR passage 60. An occlusion/reducing type NOx catalyst (hereinafter, referred to as just "catalyst") 41 is housed in the catalyst housing 42. The catalyst 41 is composed with an alumina ($Al_2O_3$) as a carrier and on this carrier, at least one of the following three components, alkali metal such as kalium (K), sodium (Na), lithium (Li) or cesium (Cs), alkaline-earth metal, such as barium (Ba) or calcium (Ca), and rare-earth element, such as lanthanum (La) or yttrium (Y), and a noble metal such as platinum (Pt) are carried by the carrier.

The catalyst 41 occludes NOx when the oxygen concentration in the exhaust gas is high and reduces NOx to $NO_2$ or NO for discharge when the oxygen concentration is low and the reducing component (such as unburned fuel component HC). The discharged $NO_2$ or NO is promptly reacted with the hydrogen carbide (HC) or carbon monoxide (CO) in the exhaust gas and further reduced to be nitrogen ($N_2$). The hydrogen carbide (HC) or carbon monoxide (CO) is oxidized itself by reducing the $NO_2$ and NO. By controlling the oxygen concentration or the hydrogen carbide (HC) component in the exhaust gas introduced into the catalyst housing 42 (catalyst 41), the NOx, HC, CO in the exhaust gas can be purified. It is to be understood that "occlusion" used herein (in this specification) means retention of a substance (solid, liquid, gas molecules) in the form of at least one of adsorption, adhesion, absorption, trapping, storage, and others.

The engine 1 is provided with various sensors which output signals relating to the environmental condition at the corresponding portions and vehicle running condition of the engine 1.

A rail pressure sensor 70 outputs a signal corresponding to the fuel pressure accumulated in the common rail 12. A fuel pressure sensor 71 outputs a signal corresponding to the fuel pressure Pg of the fuel introduced into the modulating valve 16 through the fuel supply passage P2. An air flow meter 72 outputs a signal corresponding to the air flow amount Ga of the suction air at the upstream of the throttle valve 32 within the intake system 30.

An air-fuel ratio (A/F) sensor 73 outputs a signal consecutively changing corresponding to the oxygen concentration in the exhaust gas at the downstream of the catalyst housing 42 of the exhaust system 40. An exhaust temperature sensor 74 outputs a signal corresponding to an exhaust gas temperature Tex at the downstream of the catalyst housing 42 of the exhaust system 40. An NOx sensor 75 outputs a signal consecutively changing corresponding to the NOx concentration in the exhaust gas at the downstream of the catalyst casing 42 of the exhaust system 40.

An acceleration opening degree sensor 76 is attached to an acceleration pedal (not shown) and outputs a signal corresponding to the depression amount Acc of the pedal. A crank angle sensor 77 outputs a signal (pulse) every time an output shaft (crank shaft) of the engine 1 is rotated by a predetermined angle. These sensors 70 to 77 are electrically connected to an ECU (electronic control unit) 80.

The ECU 80 includes a CPU (central process unit) 81, read only memory (ROM) 82, random access memory (RAM) 83 and back up RAM 84, and timer counter 85 and these components 81 to 85 are connected to an exterior input circuit 86 including an A/D converter and an exterior output circuit 87 via a bi-directional bus 88 to form a logic calculation circuit.

Thus structured ECU 80 inputs the signals from the sensors via the exterior input circuit 86 and based on these signals, the basic control for the fuel injection of the engine 1 is performed and at the same time performs various controls relating the engine operation conditions, such as, reducing agent (fuel) supply control relating supply timing for reducing agent (fuel functions as a reducing agent) supply, SOx poisoning recovery control for removing SOx accumulated on the catalyst 41, and deterioration determining for determining the deterioration of the catalyst 41.

The fuel supply system 10 which functions to supply fuel to each cylinder via the fuel injection valve 13 and supply fuel to the exhaust system 40 via the fuel supply nozzle 17, the catalyst 41 provided in the exhaust system 40, and the ECU 80 which controls the fuel supply system 10 and the function of the catalyst 41 are composing the exhaust gas purifying device for the engine 1 according to the embodiment of the invention. The fuel supply control, SOx poisoning recovery control, or the deterioration determining control are performed with the ECU 80 which outputs signals to these controls by the operations of these components which form the exhaust gas purifying device.

Next, the detail of basic principle of the fuel supply control and the control process therefor will be explained hereinafter.

Generally, in the diesel engine operation most of the operation area is under a high oxygen concentration condition with respect to the air-fuel mixture to be supplied in the combustion chamber for combustion.

The oxygen concentration of the air-fuel mixture to be supplied for combustion is normally reflected by the oxygen concentration in the exhaust gas by subtracting the oxygen for the combustion, and higher the oxygen concentration in the air-fuel mixture, higher the oxygen concentration in the exhaust gas becomes as a basic principle. If the oxygen concentration in the exhaust gas is high, the occlusion reducing type NOx catalyst occludes NOx, and when the oxygen concentration is low, the catalyst reduces to $NO_2$ or NO from the NOx and discharges them. Accordingly, as long as the oxygen concentration in the exhaust gas is high, the NOx is occluded. It should be noted here that the NOx occluding amount of the catalyst has a limit and after the catalyst occludes the limit amount of NOx, the remaining NOx can not be occluded and passes through the catalyst housing without being occluded by the catalyst.

Accordingly, an internal combustion engine having the fuel supply nozzle 17 as shown in the engine 1, the oxygen concentration in the exhaust gas is temporarily reduced by adding the fuel at the upstream of the catalyst 41 of the exhaust system 40 via the fuel supply nozzle 17 with a proper timing. This will also increase the reducing component amount (HC, etc.) in the exhaust gas. Then the catalyst 41 reduces NOx to $NO_2$ or NO and discharges them to restore (reproduce) the NOx occluding capacity. The discharged $NO_2$ or NO reacts with the HC or CO to reduce them to $N_2$.

The efficiency of reducing /purification of the catalyst 41 which discharges NOx occluded and reduces/purifies them is determined by the reducing component (fuel concentration) in the exhaust gas introduced into the catalyst housing 42and the oxygen concentration (air-fuel ratio).

The ECU 80 of the engine 1 consecutively observes the NOx concentration in the exhaust gas at the downstream of the catalyst 41 based on the signal from the NOx sensor 75. The NOx occluding capacity of the catalyst 41 becomes lower as the amount of NOx occluded in the catalyst 41 becomes larger, i.e., as the occluded NOx in the catalyst 41 becomes closer to the maximum amount (saturated amount). When the occluded NOx amount in the catalyst 41 increases, the NOx concentration discharged downstream without being occluded in the catalyst increases.

The ECU determines that the occluded NOx amount in the catalyst 41 exceeds the predetermined amount when the NOx concentration at the downstream of the catalyst 41 exceeds the predetermined amount and controls to supply a predetermined amount of fuel at the upstream of the catalyst 41 of the exhaust system 40 to temporarily increase the reducing component in the exhaust gas introduced into the catalyst housing 42. Thus the exhaust gas air-fuel ratio can be reduced.

Fuel supply at the upstream of the catalyst 41 of the exhaust system 40 is hereinafter called simply as "fuel supply".

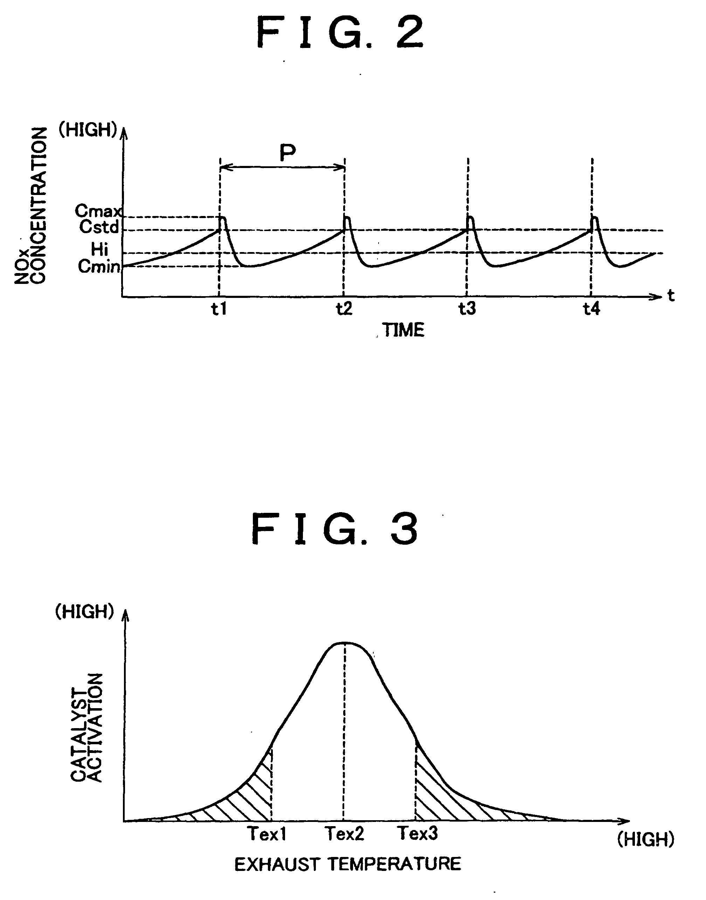

Fig. 2 shows a time chart of the NOx concentration change in the exhaust gas observed at the downstream of the catalyst 41 when the fuel supply is executed periodically. In the drawing, time t1, t2, t3, and t4 on the time axis show the timing of fuel supply being executed.

As shown in Fig.2, fuel supply is executed when the increasing NOx concentration in the exhaust gas observed at the downstream of the catalyst 41 exceeds a reference value Cstd. When the fuel supply is executed, the NOx concentration in the exhaust gas observed at the downstream of the catalyst 41 (hereinafter simply called as NOx concentration) is temporarily increased to become a relatively small maximum value and after that, the value drops rapidly to reach the minimum value. After that, the NOx concentration is gradually increased to reach again to the reference value Cstd to initiate the next fuel supply. At this time, the changing condition of the NOx concentration observed from the beginning of fuel supply at a certain time to the initiation of the next fuel supply indicates a high reproductively regarding for example, the time period between t1 and t2 (hereinafter referred to as fuel interval P), the maximum value Cmax, minimum value Cmin, or change rate of NOx concentration.

As explained, in the prior art statement, the SOx existing in the exhaust gas has a characteristic that the SOx is occluded by the catalyst 41 with a high efficiency compared to the NOx based on the same mechanism as NOx. And further, once the SOx has been occluded in the catalyst it will not be so easily discharged therefrom even under the condition that the NOx occluded in the catalyst is sufficient to be discharged, or the condition that the oxygen concentration in the exhaust gas is below the predetermined level.

Accordingly, by continuing the engine operation, the SOx in the exhaust gas is gradually accumulated on the catalyst to generate a so called SOx poisoning condition. Further, the catalyst may be heat deteriorated by a long time use or the use under the high temperature condition which exceeds a predetermined temperature. The heat deterioration of the NOx catalyst causes a sintering of a noble metal (for example, platinum Pt) composing the catalyst. It may also generate a film of hydrogen carbide (HC) by a long time use or a particular operational condition due to an accumulation of the hydrogen carbide (HC) on the surface of the catalyst 41.

Such deterioration by poisoning condition, heat deterioration, HC film will cause the decrease of the limit amount of NOx occlusion by the catalyst or the occluding efficiency of NOx and eventually cause the reduction of purification efficiency of the NOx. Such deterioration, if occurred, the changing condition of the NOx concentration observed according to the periodical fuel supply becomes different from the condition of normal functioning of the catalyst. In more detail, when the purification function is decreased by the progress of deterioration of the catalyst, the value of maximum and minimum oxygen concentration Cmax, Cmin becomes high and the supply interval P becomes shorter. As the purification function decreases by the progress of deterioration of the catalyst, the change ratio from the maximum value Cmax to the minimum value Cmin becomes small (gradual) and the change ratio from the minimum Cmin to the reference value Cstd become large (steep inclination).

The ECU 80 of the engine 1 according to the embodiment basically confirms the minimum value Cmin every time the fuel supply is executed and when the minimum value Cmin exceeds the predetermined value (upper set value) H1, the ECU determines that the catalyst 41 is deteriorated and not performs sufficient purification function.

The fuel supply is selectively executed when the catalyst 41 is under sufficient activation condition. For example, the ECU 80 always confirms the exhaust temperature Tex as a representative of the catalyst temperature and confirms that the catalyst 41 is in sufficient activation when the temperature Tex is within a predetermined level.

Fig. 3 shows a relation between the exhaust temperature Tex and the activation level of the catalyst 41. As shown in Fig. 3, the activation level of the catalyst 41 becomes maximum when the exhaust temperature Tex (representative value for the catalyst temperature) indicates a specified temperature Tex 2 and as the exhaust temperature Tex becomes smaller than or higher than the specified temperature Tex 2, the activation level becomes decreased. According to this embodiment, when the exhaust temperature Tex is within a specified temperature Tex1 (Tex 1<Tex 2) as the lower limit and a specified temperature Tex3 (Tex 2<Tex 3) as the upper limit, the catalyst 41 is considered to be sufficiently activated. The above range of temperature (Tex 1 and Tex 3) is called as catalyst activation area. When the exhaust temperature Tex is within the catalyst activation area, the ECU 80 allows the execution of fuel supply and if not, prohibits the execution of the fuel supply.

On the other hand, even when the exhaust temperature Tex is not within the catalyst activation area (corresponding to the hatched line area in Fig. 3), if the catalyst 41 is activated to an extent and the condition that the fuel supply is not made continues, a lot of NOx in the exhaust gas introduced into the catalyst housing 42 is occluded. After the condition that the fuel supply is not made continuesly for a certain time and the catalyst 41 is sufficiently activated, if the fuel supply is immediately initiated again, the NOx amount which exceeds the possible limit amount of reducing and purification is discharged quickly by the catalyst 41.

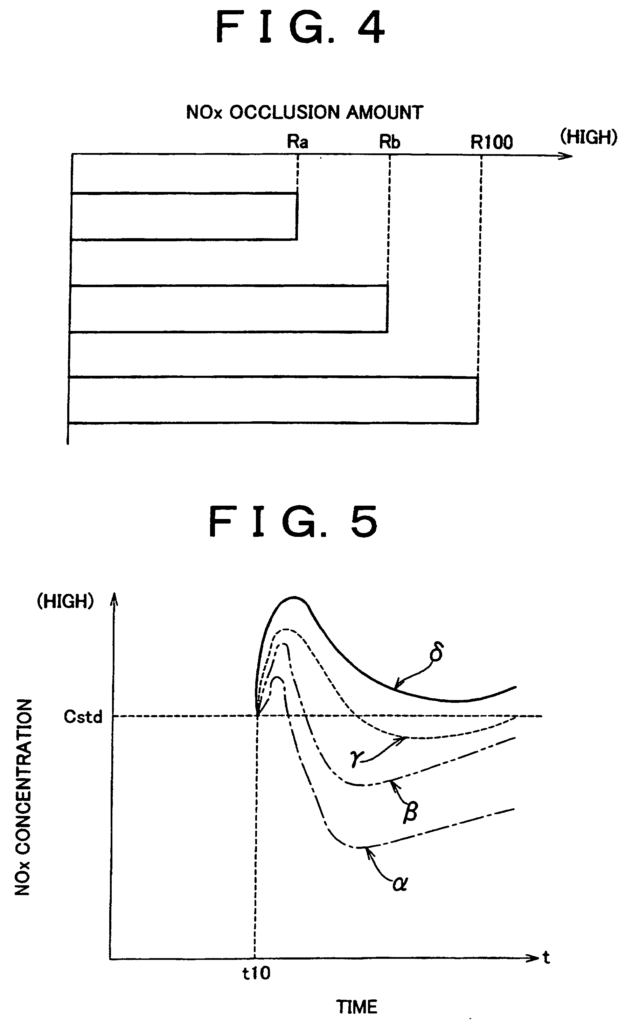

For example, as shown in a graph in Fig. 4, the NOx amount occluded in the catalyst 41 under different conditions is indicated. In the drawing, it shows that the exhaust temperature Tex of occluded amount Ra of NOx (reference or standard occlusion amount) is within catalyst activation area and the fuel supply is periodically and this condition corresponds to the NOx occlusion amount of immediately before the fuel supply being executed. The value Ra of NOx occlusion amount (occlusion amount before the supply being initiated) corresponds to the NOx occlusion amount immediately before the fuel supply being initiated after a predetermined time lapsed under the condition that the fuel supply has not been executed. The NOx occlusion amount R100 corresponds to the maximum occlusion amount that the catalyst 41 can occlude within the exhaust temperature Tex being catalyst activation area temperature.

The reference occlusion amount Ra corresponds to the value of NOx concentration reference value Cstd (Fig. 2) set for determining the fuel supply timing.

In Fig. 4, the relation between the reference occlusion amount Ra and the limit amount R100 under each condition is indicated to be Ra <R100. When the fuel supply is periodically made, the reference value Cstd of the NOx concentration is determined to supply fuel, when the smaller amount (Ra) of NOx is occluded in the catalyst 41 compared to the limit amount R100 without occluding the NOx of limit amount R100 before the fuel (reducing agent) supply. When the NOx occluded in the catalyst 41 reaches the limit amount R100, if the exhaust gas continues to be introduced into the catalyst 41 even for a very short time, the material amount of the NOx flows to the downstream of the catalyst 41. It may change the limit amount R100 due to the very small change of the temperature condition or a long time use of the catalyst 41. In other words, upon the periodical fuel supply, the ECU 80 of the engine 1 predetermines a sufficient allowance between the NOx amount (standard occlusion amount) actually occluded into the catalyst 41 and the limit amount R100, and adopts the control structure to surely occlude all the NOx introduced into the catalyst 41.

On the other hand, as shown in Fig. 4, the occlusion amount Rb before the initiation (re-start) of the fuel supply may exceed the standard occlusion amount Ra limiting the limit amount R100 as the upper limit for a period of time that the fuel supply has not been made, even the amount Rb changes according to the engine operation condition, or the temperature to which the catalyst 41 is exposed. When the occlusion amount Rb before the initiation of the fuel supply is different from the standard occlusion amount Ra, and the fuel supply to the catalyst 41 is executed, the discharged NOx amount from the catalyst 41 become different from the condition that the fuel supply is periodically made and the changing condition of the NOx concentration observed at the downstream of the catalyst 41 becomes different. Particularly, when the occlusion amount Rb before the fuel supply exceeds the standard occlusion amount Ra, the maximum and minimum values Cmax and Cmin of the NOx concentration becomes high and the supply interval P becomes shorter in the NOx concentration changing condition. In other words, it shows a tendency that the deterioration of the catalyst 41 is progressed to decrease the purification function of the catalyst. If the fuel supply is executed under the condition that the NOx amount occluded in the catalyst 41 exceeding the predetermined value, the extra amount of NOx which exceeds the amount capable of reducing and purification by the catalyst 41 is discharged from the catalyst 41.

For example, as shown in Fig. 5, it shows a time chart of the changing condition of the NOx concentration observed at the downstream of the catalyst 41. The changing condition $\alpha$ shows a normal condition that the catalyst is not deteriorated and corresponds to the changing condition that the fuel is supplied to the catalyst which has a NOx amount of standard occlusion amount Ra. Further, the changing condition $\beta$ shows an SOx poisoning condition that the catalyst is deteriorated by the poisoning condition and corresponds to the changing condition that the fuel is supplied to the catalyst which has an NOx amount of standard occlusion amount Ra. The changing condition $\gamma$ shows a normal condition that the catalyst is not deteriorated and corresponds to the changing condition that the fuel is supplied to the catalyst which has an NOx amount somewhat larger than the standard occlusion amount Ra. The changing condition $\delta$ shows a normal condition that the catalyst is not deteriorated and corresponds to the changing condition that the fuel is supplied to the catalyst which has an NOx amount larger than the condition $\gamma$. In Fig. 5 the time t10 on the time axis indicates the time for fuel supply execution. The changing condition $\alpha$ indicates the same as Fig. 2 in some part.

As clear from the comparison between the changing conditions $\alpha$ and $\beta$, when the deterioration occurs at the catalyst 41, the maximum and minimum values Cmax and Cmin become high and the supply interval P becomes shorter. But on the other hand, as shown in the conditions $\delta$ and $\gamma$, even when the NOx occlusion amount at the catalyst 41 increases, the maximum and minimum values Cmax and Cmin become high and the supply interval P becomes shorter. It means that the determination of difference between the conditions $\delta$ and $\gamma$ is difficult and it may lead to a misjudgment of deterioration of the catalyst 41. Particularly, as shown in the condition $\delta$, when the NOx occlusion amount of the catalyst 41 exceeds the predetermined value, the minimum value Cmin reaching by the fuel supply may exceed the standard value Cstd. In this case, when the NOx concentration exceeds the set upper limit value, if the feed back control of the fuel supply is executed at this point, an extra fuel may be supplied to the catalyst 41 and may lead to a reduction of the exhaust characteristic by the increase of the discharge of the hydrogen carbide HC.

The ECU 80 of the engine 1 according to the embodiment, prohibits the deterioration determination for a period of time if the condition that the fuel is not supplied continues. Further, the ECU 80 controls to supply fuel when the NOx concentration observed at the downstream of the catalyst 41 exceeds the standard value Cstd, which is a normal fuel supply and the ECU 80 changes the control from the normal fuel supply to another fuel supply at a predetermined timing for a period of time after the condition that the fuel is not supplied continues.

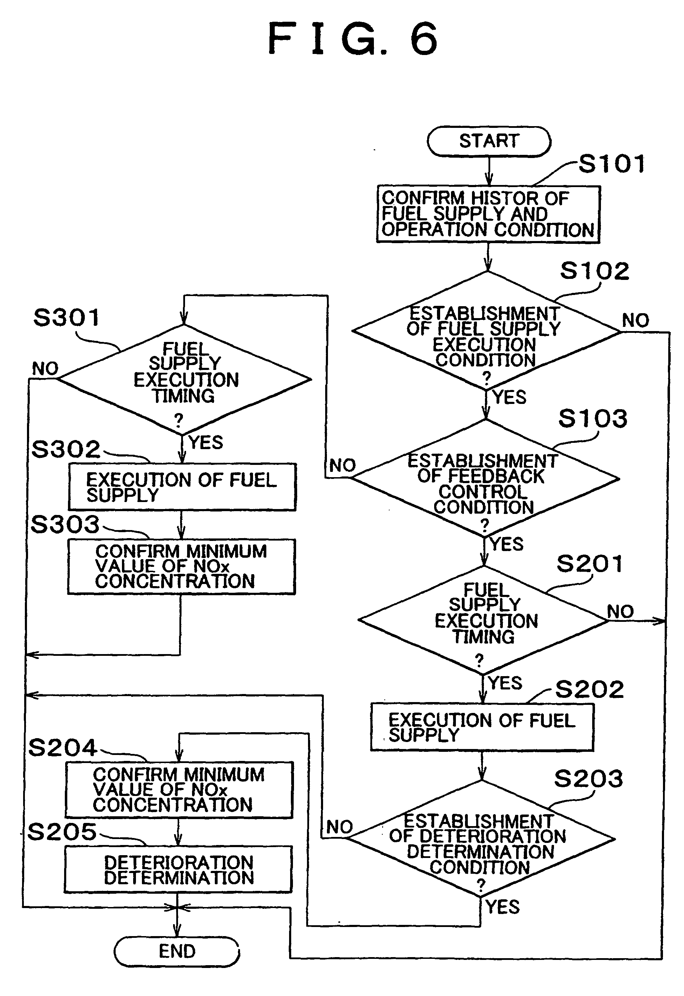

Referring now to the fuel supply control by the ECU 80 of the engine 1 according to the embodiment with reference to the flow chart explaining in detail of its procedure, in Fig. 6, a fuel supply control routine for controlling the supply amount and supply timing upon the fuel supply to the exhaust system 40 is shown. This routine procedure is initiated at the same time the engine 1 is started through the ECU 80 and repeated every predetermined time.

The procedure is moved to this routine procedure, the ECU 80 confirms the history of the procedures to present which have been made regarding the fuel supply at step S101.

The fuel supply implementation according to the routine:

(1) feed back control to repeat fuel supply every time when the NOx concentration confirmed by the signal from the NOx sensor 75 exceeds the standard value Cstd during the increasing process of the NOx concentration;
(2) control by using map to repeat fuel supply every supply interval P predetermined by the map; and
(3) prohibit control not to supply fuel.

In the step S101, ECU first confirms which one of the above three implementations is done in previous routine procedure. If it is confirmed that the routine (3) was executed which prohibits the fuel supply, then the ECU confirms the period of how long such procedure has been continued. Further, at step S101, ECU confirms that the necessary operation condition for the control of the modulating valve 16 regarding the fuel supply. For example, the ECU 80 calculates the engine revolution number Ne of the engine 1 based on the signal from the crank angle sensor 77, and NOx concentration in the exhaust gas based on the signal from the NOx sensor 75. The ECU further confirms the pedal depression amount Acc of the acceleration pedal and the exhaust temperature Tex.

In step S102, ECU determines whether the necessary condition for fuel supply regarding the engine operation condition is established or not. For example, the following two conditions (A1) and (A2) shall be established for the fuel supply execution:

(A1) the exhaust temperature Tex exceeds a predetermined value (for example, 250 °C) This will indicate that the catalyst 41 is sufficiently activated.
(A2) the engine operation condition is determined to be applicable to fuel supply, based on the relation of engine revolution number Ne and pedal depression amount Acc of the acceleration pedal.

If the above two conditions are met, the ECU 80 moves to the next step S103 for next procedure and if one of the conditions is not met, the routine temporarily stops here.

In the step S103, the condition that the feed back control is determined to be established or not. This determination is made based on the confirmed history relating to the fuel supply at the step S101. When the non-fuel supply (3) period is less than a predetermined period, or the feed back control (1) is being continued, the ECU determines that the condition for the feed back control is established and moves to step S201. On the other hand, if the non-fuel supply (3) period is longer than the predetermined period, or the control by map (2) continues, then the ECU determines that the feed back control condition is not established and proceeded to S301.

A series of prosecutions from step S201 to S205 relates to the feed back control (1). At step S201, it is determined that whether the present time is the time for fuel supply execution. In more detail, if the NOx concentration in the exhaust gas confirmed by the signal from the NOx sensor 75 is under increasing phase and exceeds the standard value Cstd (Fig. 2), the present time is determined to be the time for fuel supply. ECU 80 upon positive determination, proceeds to the step S202 and if negative, the routine stops temporarily.

In the step S202, the fuel supply is executed by modulating the opening degree of the modulating valve 16 via the fuel supply nozzle 17. The quantity Q of the fuel supply amount (total) injected by the fuel supply nozzle 17 is determined by the following formula i basically as a function of opening time T (ms) of the valve 16 and a function of the fuel pressure Pg applied to the fuel supply nozzle via the fuel supply passage P2 during the opening of the valve 16:

$$Q = f(T, Pg) \qquad (i)$$

The ECU 80 calculates the opening time T of the valve 16 based on the present fuel pressure Pg to be introduced into the modulating valve passing through the supply fuel passage P2 so that the above determined fuel quantity Q may be injected to the exhaust system. The valve 16 is opened for a time (valve opening period) T by energizing the valve 16 continuously or intermittently so that the fuel may be injected corresponding to the supply pattern defined above.

In step S203, ECU determines whether the condition for deterioration determination of the catalyst 41 is established or not. This deterioration determination can be made when the following two condition are met:

(B1) after the procedure of step S202 has been executed at previous time, the procedure at the step S202 is executed at this time without being determined at the step S102 or S103. In other words, the fuel supply is executed twice or more consecutively including this time based on the feed back control (1) without being moved to any of the control by map (2) and non-fuel supply control (3).

(B2) during the period between the previous supply time and the supply of this time (supply interval P), the changing of engine operation represented by engine revolution number Ne or pedal depression amount Acc by the acceleration pedal is less than a predetermined value. In other words, the engine 1 operation has been stable (sub-normal condition)

The ECU 80 determines that the deterioration determination for the catalyst 41 should be executed if the above two conditions are met and proceeds to the step S203. However, if at least one of the above conditions is not established, then the routine temporarily stops here.

In the step S204, preceding the deterioration determination, the minimum value Cmin of the NOx concentration observed at the downstream of the catalyst 41 after the execution of the previous fuel supply is confirmed.

In step S205, the deterioration of the catalyst is determined. In more detail, when the minimum value Cmin of the NOx concentration after the execution of fuel supply confirmed at the step S204 exceeds the set upper limit value H1, the deterioration or the reduction of the catalyst is determined. After the procedure in step S205 is executed, the ECU 80 once ends the following procedures.

On the other hand, after the negative determination at the step S103, a series of procedures at the steps S301 and S302 relate to the control by map (2).

First, in the step S301, it is determined whether the present time is the time for the fuel supply or not. The ECU 80 calculates the supply interval P based on the history of the engine operation condition (such as exhaust temperature Tex, engine rpm Ne, fuel supply amount for engine combustion) observed during the time period of non-fuel supply with reference to a control map (not shown) when the procedure is proceeded to the step S301 for the first time after the non-fuel supply condition continues more than the predetermined period.

The first fuel supply timing is determined at the time the procedure is proceeded to step S301 for the first time after the non-fuel supply period continues more than the predetermined period. When the determination at S301 is positive, the ECU 80 moves to the step S302 and on the other hand, if the determination at S301 is negative, the ECU once stops this routine.

In the step S302, the fuel supply is executed through the opening control of the modulating valve 16 as explained in the step S302.

In step S303, the minimum value of NOx concentration observed after the fuel supply executed at the step S302 is confirmed. Here, The ECU 80 determines that the NOx occlusion amount of the catalyst 41 is not decreased (restored) to the level of periodical duel supply execution when the minimum value Cmin of the NOx concentration exceeds the predetermined value. In other words, the ECU memorizes that the control by the map should be continued to be adopted and in the step S103, the negative determination is made for the next time (no feed back control is made). On the other hand, when the minimum value Cmin of the NOx concentration is less than the predetermined value, the ECU 80 determines that the NOx occlusion amount of the catalyst 41 is decreased (restored) to the level of periodical duel supply execution. This means that the ECU memorizes that the control by the map (2) should be ended and in the step S103, the positive determination is made for the next time (feed back control is to be executed).

After the step S303 procedure, once the ECU ends its procedures.

Based on the above procedures, the exhaust gas purifying device for the engine 1 according to the embodiment can continuously reducing/purification of the NOx occluded in the catalyst 41 and reproduce the occluding capacity of the catalyst and at the same time to determine the deterioration of the catalyst 41.

According to the exhaust gas purifying device for the engine 1 which reduces and purifies the NOx in the exhaust gas via the catalyst 41 and determines the deterioration of the catalyst 41 with a proper timing, the deterioration determination for the catalyst 41 is prohibited for a predetermined period of time after the condition that the fuel is not supplied. Accordingly, the possibility of the misjudgment due to the extra NOx flowing to the downstream of the catalyst 41 can be avoided.

Further, by properly selecting the control from one of the fuel supply control by the map (periodical supply) and the control by feed back (periodical supply), in other words, by selecting the control for the fuel supply in accordance with the catalyst condition, the performance of catalyst regarding the reducing and purification is always kept optimized.

In the fuel supply control routine, the deterioration of the catalyst 41 is determined to be generated when the minimum value Cmin of the NOx concentration observed at the downstream of the catalyst 41 after the fuel supply execution exceeds the set upper limit value H1 (step S205). On the other hand, for example, the deterioration of the catalyst 41 is determined to be generated when the maximum value Cmax of the NOx concentration observed at the downstream of the catalyst 41 after the fuel supply execution exceeds the set upper limit value H1 (step S205). Further, the deterioration of the catalyst 41 is determined to be generated when the supply interval P between the previous fuel supply time and the present fuel supply time is shorter than the predetermined period of time. In other words, as long as the changing condition of the NOx concentration observed at the downstream of the catalyst 41 after the fuel supply execution can be recognized to be different due to the deterioration of the catalyst, any other standard or reference value can be used to obtain the effects of the present embodiment.

Further, in the fuel supply control routine, when the minimum value Cmin of the NOx concentration observed at the downstream of the catalyst 41 after the fuel supply control by map is initiated, becomes the value less than the predetermined value, the control by map once terminates (return to feed back control). When the control by map to supply fuel is periodically executed, the maximum and minimum values Cmax and Cmin of the NOx concentration which changes after the fuel supply are gradually decreased according to the number of fuel supply executions. Accordingly, when the maximum and minimum values Cmax and Cmin or the average value between the maximum and minimum values become lower than the predetermined value after the control by map, the control by map once terminates (return to the feed back control). This will also obtains the expected effects same as or similar to the effects by the embodiment.

It is also applicable to predetermine the period for continuing the control by map based on the NOx occlusion amount of the catalyst 41 at the time of initiation of the control by map. In this case, the NOx occlusion amount qnstk of the catalyst 41 at the time of initiation of the control by the map can be calculated by the function of the difference between for example, the NOx amount (flow amount) qnin in the exhaust gas (incoming gas) flowing into the catalyst 41 and the NOx amount (flow amount) qnout in the exhaust gas (outgoing gas) flowing out of the catalyst 41 (refer to the following formula ii).

$$qnstk = f\,(qnin - qnout) \qquad (ii)$$

Here, the NOx amount (flow amount) qnin in the exhaust gas (incoming gas) flowing into the catalyst 41 can be calculated with reference to the control map (not shown) based on the engine rpm Ne confirmed during the period of non-fuel supply and the fuel consumption amount supplied for the combustion of engine 1. The NOx amount (flow amount) qnout in the exhaust gas (outgoing gas) flowing out of the catalyst 41 can be calculated based on the signal from the NOx sensor 75 confirmed during the period of non-fuel supply and the fuel consumption amount supplied for the combustion of engine 1.

The timing for changing the fuel supply condition from the control by map to feed back control (switching timing) is determined by using various standards as described above. It may be applicable to use all of such standards or a plurality thereof. In this case, presuming the switching timings based on the standards used, the fastest timing or the slowest timing can be selected for actual use to change the control condition from the control by map to the feed back control.

(SECOND EMBODIMENT)

Next, referring to the exhaust gas purifying device for an internal combustion engine applied for the diesel engine system as the second embodiment. The explanation will be mainly the different portions from the first embodiment.

It should be noted that the engine system, ECU, and the surrounding electrical structure (Fig. 1) portions are same as those in the first embodiment. Accordingly, the same numerals are used for the components having the same function and structure or the hardware structure and the details thereof will be omitted.

In the fuel supply control routine as explained in the first embodiment, the deterioration determination of the catalyst 41 is determined based on the maximum and minimum values Cmax and Cmin of the NOx concentration or the length of supply interval P appeared by the repetition of the fuel supply by feed back control.

As explained in the prior art statement, The SOx in the exhaust gas is occluded by NOx catalyst based on the same mechanism with the NOx case and yet with higher efficiency compared to the NOx and yet even under the condition that NOx occluded in the catalyst is discharged or under the condition that the oxygen concentration in the exhaust gas is less than the predetermined level, the SOx will not be easily discharged. Accordingly, continued engine operation may gradually accumulate the SOx in the exhaust gas in the catalyst to generate a so called SOx poisoning condition. In other words, by the increase of the accumulation of the SOx amount (occlusion amount), the limit amount of NOx occluding capacity of the catalyst 41 is reduced thereby to reduce the purification ratio of the NOx. Thus the deterioration of the catalyst is generated.

The ECU 80 of the engine 1 according to the second embodiment executes the fuel supply control routine corresponding to the same control of the first embodiment. On one hand, in this routine, when the deterioration of the catalyst 41 is determined to be generated and the purification function of the NOx is determined to be decreased, the ECU 80 estimates that the SOx is accumulated on the catalyst 41 (SOx poisoning condition is generated) and removes the SOx from the catalyst 41 (SOx poisoning recovery procedure). Further, ECU 80 determines whether the catalyst 41 deterioration condition can be restorable or not (complete deterioration condition) by the progress of SOx poisoning condition, HC poisoning condition, or heat deterioration based on the catalyst 41 condition after the SOx poisoning recovery procedure.

The detail procedure of ECU 80 of the engine 1 according to the embodiment with respect to the recovery procedure of SOx poisoning condition and the determination of complete deterioration of the catalyst 41 with reference to the flow chart.

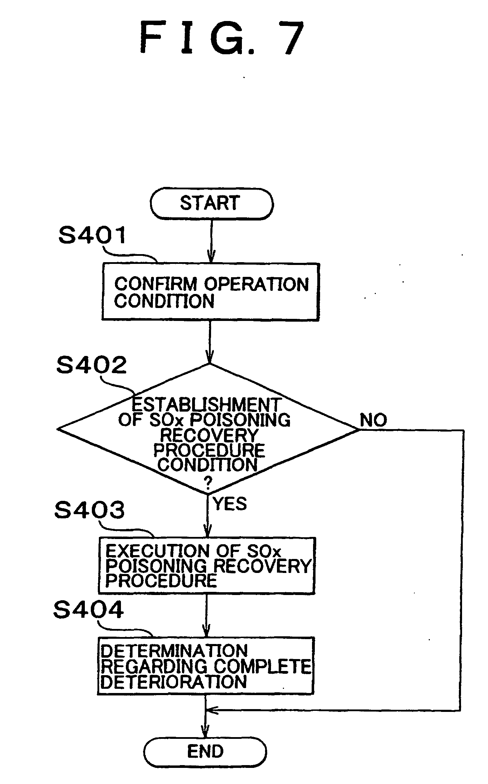

In Fig. 7, the procedure of SOx poisoning condition recovery routine for discharging the SOx accumulated on the catalyst 41 is shown.

In the step S205 (Fig. 6) of the fuel supply control routine, when it is determined that the catalyst 41 is deteriorated and that the purification of NOx is decreased, ECU 80 once terminates the procedure of the routine and moves to the procedure of SOx poisoning condition recovery routine as soon as possible. The SOx poisoning condition recovery routine is a control routine to be selected from either the fuel supply control routine or the SOx poisoning condition recovery routine. Accordingly, when one of them is executed, the other procedures can not be executed at the same time.

When the procedure moves to this routine, ECU 80 first confirms at the step S401 the necessary engine operation condition for executing the SOx poisoning recovery procedure. For example, the ECU 80 calculates engine 1 revolution number Ne based on the output signal from the crank angle sensor 77 and NOx concentration in the exhaust gas based on the output signal from the NOx sensor 75. Further, the ECU confirms the acceleration pedal depression amount Acc and exhaust temperature Tex and so on.

Following the step S401, at the step S402, ECU determines whether the necessary condition for execution of the SOx poisoning recovery procedure is established or not. For example, establishment of any of the following conditions (C1) and (C2) is essential for the fuel supply execution.

(C1) the exhaust temperature Tex exceeds the predetermined value (for example 300°C).

This corresponds to the conditions that the catalyst 41 is sufficiently activated and that the temperature thereof has become sufficiently high to be the condition of easy discharge of the SOx. In order to meet this requirement, a heater (not shown) is provided at the upstream of the catalyst 41 of the exhaust system 40 to operate the heater or low temperature combustion (to increase the unburned component in the exhaust gas by increasing the EGR ratio) is conducted to positively raise the temperature of the catalyst 41. (C2) To be determined that the engine 1 operation condition is suitable for SOx poisoning recovery considering the relation with the engine revolution number Ne and the acceleration pedal depression amount Acc etc. In this condition, the engine load is set to be lower (less load engine operation area) than the condition (A2) adopted for the fuel supply execution (fuel supply control routine) in the step S102.

If both of these conditions (C1) and (C2) have been established, the ECU 80 moves the procedure to step S403 and if any of them is not established, the routine is once stopped.

In the step S403, the ECU 80 executes the SOx poisoning recovery procedure. The SOx poisoning recovery procedure supplies fuel to the catalyst 41 via the fuel supply nozzle 17 by adjusting the valve opening degree of the modulating valve 16. This procedure takes a longer time compared to the time for the normal fuel supply under the higher temperature condition than the temperature under the normal fuel supply and in other words, under the procedure relatively large amount of fuel (reducing agent) is supplied to the catalyst 41.

In the following step S404, the complete deterioration of the catalyst 41 is determined. This determination is made by the following steps 1 to 4:

(STEP 1)

The total SOx amount Sin flowing into the catalyst 41 during the time from the completion of the previous SOx poisoning recovery procedure to the completion of present SOx poisoning recovery procedure is calculated by the following formula:

$$Sin = Qtotal * Sconc * a \qquad (iii)$$

Wherein, Qtotal: corresponding to the fuel consumed amount of the engine 1 from the time of completion of the previous SOx poisoning recovery to the time of completion of the present SOx poisoning recovery (total fuel for the origin of the exhaust gas passing through the catalyst 41; hereinafter this amount is referred to as "entire fuel consumption amount"
Sconc: sulfur (S) content ratio of the engine 1 fuel (for example, 0.1 to 0.5 weight %)
a: coefficient (for example defined based on the suction air amount Ga or exhaust temperature Tex)

(STEP 2)

In this step, the discharged SOx amount Srel (hereinafter referred to as SOx discharge amount) from the catalyst 41 by the present time SOx poisoning recovery is calculated. The SOx discharge amount Srel is confirmed to be approximately proportional to the execution time for SOx poisoning recovery (continued fuel supply period). Accordingly, the SOx discharge amount is calculated based on the present time SOx poisoning recovery procedure execution period with reference to the map (not shown).

(STEP 3)

The SOx amount Sstk (referred to as SOx accumulated amount) still accumulated on the catalyst 41 at the time of completion of the present time SOx poisoning recovery procedure following the following formula (iv):

$$Sstk = Sin - Srel + Sstk (old) \qquad (iv)$$

Wherein, Sstk (old) : the SOx accumulated amount at the time of previous SOx poisoning recovery procedure.

(STEP 4)

Here it is determined whether the SOx accumulated amount Sstk exceeds the predetermine value or not. If the determination is positive, it means that the condition that a large amount of the SOx is accumulated on the catalyst 41 still continues even the SOx poisoning recovery has been executed. In this case, ECU 80 determines that the catalyst 41 is completely deteriorated. If the determination is negative, it means the catalyst 41 has been sufficiently recovered from the SOx poisoning condition by the SOx poisoning recovery procedure. The ECU 80 then determines that the complete deterioration of the catalyst 41 is not generated (the catalyst 41 is under restorable condition).

After the step S404, the ECU 80 once ends the procedure. In the step S404, if the ECU determined that the catalyst 41 is completely deteriorated, the ECU 80 warns by turning on an alarm lamp (not shown) or by generating an alarm sound to warn the operator of the vehicle to exchange the catalyst and so on.

Following the above procedural steps, the exhaust gas purifying device of the engine 1 according to the present embodiment, in addition to the execution of fuel supply control similar to the first embodiment, SOx poisoning recovery procedure and the determination of complete deterioration of the catalyst 41.

Through the series of procedures, the reducing /purification of the NOx included in the exhaust gas of the engine 1, confirmation of the generation of the deterioration of the catalyst 41, function recovery of the deteriorated catalyst 41, and detection of generation of complete deterioration which is very difficult to be recovered can be performed.

By the above embodiment, reducing /purification of the NOx in the exhaust gas by the catalyst 41 and at the same time the deterioration determination of the catalyst 41 with a proper timing can be achieved according to the exhaust gas purifying device of the engine 1 and in addition to the effects mentioned in the previous embodiment, if the complete deterioration which can not be restorable at the catalyst 41, the device according to this embodiment can detect (determine) such condition and can provide a proper action for the condition.

Similar to the first embodiment, after the condition that the fuel supply is not conducted continues, a control structure that prohibits the determination of complete deterioration for a period of time can be adopted to avoid the misjudgment of complete deterioration of the catalyst 41 which might occur due to an excess NOx flowing to the downstream of the catalyst 41.

In other words, regarding to the deterioration condition of the catalyst 41, it can determine and detect distinctly and accurately the restorable deterioration and non-restorable deterioration of the catalyst 41. Not only determining the generation of the deterioration of the catalyst 41 but also determining the level of the deterioration can be achieved to improve the reliability and accuracy of determination.

In stead of determination procedure in step S404 of "SOx poisoning recovery routine", the following procedure can be performed to determine the complete deterioration of the catalyst 41. In other words, after the execution of the SOx poisoning recovery procedure, execution of the normal fuel supply is executed and the change condition of the maximum value Cmax and minimum value Cmin of the NOx concentration NOx or the supply interval P observed after the execution may be confirmed. Based on the principle similar to the fuel supply control routine in the step S205, when the maximum value Cmax or the minimum value Cmin of the NOx concentration exceeds the predetermined value or the supply interval P is below the predetermined period of time, the complete deterioration of the catalyst 41 is determined. The effects similar to the second embodiment can be obtained by this procedure for the complete deterioration determination.

In the second embodiment, upon the SOx poisoning recovery control, the catalyst 41 is positively raised its temperature. However, on the contrary, by selecting the temperature rising timing of the catalyst 41 the SOx poisoning recovery control can be executed, i. e., by reducing the exhaust air-fuel ratio, the SOx poisoning recovery control can be executed.

Further, in the first and second embodiments, upon fuel supply control or procedure of SOx poisoning recovery the fuel (reducing agent) is supplied to the exhaust system 40 via the fuel supply nozzle 17 to reduce the exhaust air-fuel ratio (enrichment). However, instead of this, fuel supply can be performed by supplying the fuel to each cylinder (combustion chamber 20) via the fuel injection valve 13 and fuel is supplied to a cylinder under the exhaust process to reduce the exhaust air-fuel ratio. It may also possible to raise the catalyst temperature by raising the exhaust temperature by execution of the fuel supply through the fuel injection valve 13 when each of the cylinders is under the exhaust process (a so called post injection).

Further, according to the above embodiments, as a parameter which the ECU 80 confirms preceding the fuel supply execution, the exhaust temperature Tex confirmed based on the detected signal from the exhaust temperature sensor 74 provided at the downstream of the catalyst housing 42 of the exhaust system 40 is used. On the contrary, the exhaust temperature sensor can be provided at the upstream of the catalyst housing 42 of the exhaust system 40 or at each exhaust port of the cylinders and based on the signal from sensor provided at such different portion, the temperature in the exhaust system 40 can be confirmed. Instead of confirming the exhaust temperature Tex detected by the exhaust temperature sensor, it may also be confirmed by the parameters representing engine 1 operation condition, such as engine revolution number Ne or depression amount of acceleration pedal to estimate (calculate) the temperature in the exhaust system 40 (temperature in the exhaust port, upstream or downstream of the catalyst housing 42).

In the above embodiments, as a reducing agent, fuel for diesel engine (gas oil) is used. In addition to this fuel, any other reducing agent, such as gasoline, kerosene can be used as long as they have a function of reducing NOx as the reducing component in the gas.

In the above embodiments, by using the supply pump 11 for supply fuel from the fuel tank to the common rail 12, the part of the fuel pumped from the supply pump 11 is supplied into the exhaust system 40 by fuel supply execution. However, the system is not limited to the above structure, an independent supply system for fuel supply which includes for example, fuel tank, or other fuel supply source (reducing agent) can be adopted to supply fuel from such independent supply source.

Further, in the above embodiments, upon duel supply to the exhaust system, the fuel pressure supplied via the fuel supply passage P2 is controlled by the modulating valve 16 and through the pressure control, the opening and closing operation of the fuel supply nozzle 17 is controlled.

On the contrary, it can also use an electromagnetic valve as an injection valve which is directly controlled its opening and closing operation by energizing the ECU 80 for fuel supply execution.

Still further, in the embodiments described above, the exhaust gas purifying device according to the present invention is adopted to the in-line four cylinder diesel engine 1 as an internal combustion engine. However, the present invention can also be adopted to a gasoline engine of a lean burn system. In addition, the engine type is not limited to the in-line four cylinder internal combustion engine, this invention can be adopted to a different number cylinder type engine.

As described, according to each embodiment of the present invention, the determination of deterioration of the catalyst is prohibited for a period of time after the non-fuel supply period is moved to the fuel supply period thereby to prevent any misjudgment of deterioration due to the existence of the extra NOx flowing downstream of the catalyst. Accordingly, the accuracy and reliability of deterioration determination for the NOx catalyst are improved.

Further, the present invention can provide a high reproductivity for the relation between the reducing agent supply and the change of NOx concentration by the supplied reducing agent and the accuracy and reliability of deterioration determination based on the NOx concentration can be also highly improved.

Further, according to the invention, the NOx catalyst deterioration determination is performed based on the parameters which accurately reflect the deterioration of the catalyst and the level of the deterioration, which also improves the accuracy and the reliability of the determination.

Still further, the chance or timing of the NOx catalyst determination will not be missed and yet sufficiently reliable determination can be performed.

According to each embodiment of the present invention, by supplying the reducing agent to the NOx catalyst periodically and with a predetermined amount, when the NOx occlusion amount in the NOx catalyst is within a predetermined value, the detected NOx concentration is used as a parameter which accurately reflects the NOx occlusion amount. This is used for the reducing agent supply (for example, supply timing or supply amount) by feed back control. On one hand, by supplying the reducing agent, a part of the NOx discharged from the NOx catalyst flows out to the downstream of the catalyst without being reduced or purified and when it influences the detecting NOx concentration, a predetermined amount of reducing agent is supplied to the NOx catalyst with a predetermined timing based on the predetermined conditions.

In other words, by continuing the non-supply condition of the reducing agent, the NOx purifying function by the NOx catalyst is always maintained under a stable condition even when the NOx occlusion amount in the NOx catalyst is changed.

The feed back control is prohibited for a sufficient period of time until the possibility of the controllability disappears. Thus an accurate control in accordance with the Nox catalyst condition (NOx occlusion amount) can be selectively performed.

**Claims**

1. An exhaust gas purifying device for an internal combustion engine, comprising:

   a NOx catalyst (41) provided in an exhaust system (40) of the internal combustion engine (1) for occluding NOx when a reducing component concentration in an exhaust gas flowing in the exhaust system (40) is low and discharging and reducing the occluded NOx when the reducing component concentration in the exhaust gas flowing in the exhaust system (40) becomes high;
   a NOx detecting means (75) for detecting the NOx concentration in the exhaust gas flowing in the downstream of the NOx catalyst (41);
   a control means (80) for controlling a deterioration determination of the NOx catalyst based on the detected NOx concentration;
   a reducing agent supply means (10, 14, P2, 16, and 17) for supplying a reducing agent into the exhaust gas flowing through the NOx catalyst; and
   a supply period deciding means (80) for deciding a supply period of the reducing agent by the reducing agent supply means (10, 14, P2, 16, and 17) and a non-supply period of the reducing agent by the reducing agent supply means (10, 14, P2, 16, and 17)

   **characterized by**
   a control prohibiting means (80) for prohibiting the deterioration determination of the NOx catalyst by the control means (80) for a period of time after the non-supply period of the reducing agent is changed to the supply period of the reducing agent, wherein
   when the time interval (P) between the present supply of the reducing agent and next supply of the reducing agent is longer than a predetermined time length, the control prohibiting means (80) prohibits the deterioration determining for NOx catalyst for a certain period of time after the control for the reducing agent is changed from the non-supply control to the supply control.

2. The exhaust gas purifying device according to claim 1, **characterized in that**
   the exhaust gas purifying device includes a reducing agent supply timing deciding means (80) for deciding a supply timing of the reducing agent by the reducing agent supply means (10, 14, P2, 16, and 17) based on the detected NOx concentration; and
   the control means (80) determines the deterioration of the NOx catalyst (41) based on a time period of the timing decided by the reducing agent supply timing deciding means (80).

3. The exhaust gas purifying device according to claim 2, **characterized in that** the supply period deciding means (80) decides the supply period and the non-supply period of the reducing agent by the reducing agent supply means (10, 14, P2, 16, and 17) based on either one of the engine operation condition and an activation condition of the NOx catalyst (41).

4. The exhaust gas purifying device according to claim 1, **characterized in that** the control means (80) determines the deterioration of the NOx catalyst (41) based on a change of the detected NOx concentration after the supply of the reducing agent.

5. The exhaust gas purifying device according to any one of claims 1 to 4, **characterized by** further comprising:

   a NOx occlusion amount estimating means (80) for estimating a NOx occlusion amount occluded in the NOx catalyst (41); and
   a prohibiting period deciding means (80) for deciding the period of time for prohibiting the deterioration determination based on the estimated NOx occlusion amount.

6. The exhaust gas purifying device according to claim 1, **characterized in that**

the control means (80) feedback controls supply operation of the reducing agent by the reducing agent supply means (10, 14, P2, 16, and 17) based on the detected NOx concentration; and

the control prohibiting means (80) prohibits an execution of the feedback control by the control means (80) for a period of time after the non-supply period of the reducing agent is changed to the supply period of the reducing agent so as to supply the reducing agent within a predetermined interval.

7. The exhaust gas purifying device according to claim 6, **characterized in that** the prohibition of the feedback control by the control prohibiting means (80) is released when the detected NOx concentration falls below a predetermined value.

8. The exhaust gas purifying device according to claim 6 or 7, **characterized by** further comprising:

a NOx occlusion amount estimating means (80) for estimating a NOx occlusion amount occluded in the NOx catalyst (41); and

a period deciding means (80) for deciding the period of time controlled by the control prohibiting means (80) based on the estimated NOx occlusion amount.

9. The exhaust gas purifying device according to any one of claims 1 to 8, **characterized in that** the control means (80) determines that NOx catalyst has been in the deterioration state if a minimum value of the detected NOx concentration exceeds a predetermined upper limit value.

**Patentansprüche**

1. Abgasreinigungsvorrichtung für einen Verbrennungsmotor, umfassend

einen in einem Abgassysem (40) eines Verbrennungsmotors (1) vorgesehenen NOx-Katalysator (41) zum Einschließen von NOx, wenn eine Konzentration eines Reduktionsbestandteils in einem in dem Abgassystem (40) strömenden Abgas niedrig ist und zum Abgeben und Reduzieren des eingeschlossenen NOx, wenn die Konzentration des Reduktionsbestandteils in dem in dem Abgassystem (40) strömenden Abgas hoch wird;

eine NOx-Erfassungseinrichtung (75) zur Erfassung der NOx-Konzentration in dem stromabwärts des NOx-Katalysators (41) strömenden Abgas;

eine Steuereinrichtung (80) zur Steuerung einer Verschlechterungsbestimmung des NOx-Katalysators auf der Grundlage der erfaßten NOx-Konzentration;

eine Reduktionsmittelzuführeinrichtung (10, 14, P2, 16 und 17) zur Zuführung eines Reduktionsmittels in das durch den NOx-Katalysator strömende Abgas; und

eine Zuführdauerbestimmungseinrichtung (80) zur Bestimmung einer Zuführdauer des Reduktionsmittels mittels der Reduktionsmittelzuführeinrichtung (10, 14, P2, 16 und 17) und einer Nicht-Zuführdauer des Reduktionsmittels mittels der Reduktionsmittelzuführeinrichtung (10, 14, P2, 16 und 17) **gekennzeichnet durch**

eine Steuerunterbrechungseinrichtung (80) zur Unterbrechung der Verschlechterungsbestimmung des NOx-Katalysators mittels der Steuereinrichtung (80) für eine Zeitdauer, nachdem die Nicht-Zuführdauer des Reduktionsmittels zur Zuführdauer des Reduktionsmittels verändert wird, wobei

wenn das Zeitinterval (P) zwischen der gegenwärtigen Zuführung des Reduktionsmittels und der nächsten Zuführung des Reduktionsmittels länger als eine bestimmte Zeitdauer ist, die Steuerungsunterbrechungseinrichtung (80) die Verschlechterungsbestimmung für den NOx-Katalysator für eine gewisse Zeitdauer unterbricht, nachdem die Steuerung des Reduktionsmittels von der Nicht-Zuführsteuerung zu der Zuführsteuerung verändert wird.

2. Abgasreinigungsvorrichtung nach Anspruch 1, **dadurch gekennzeichnet, dass**

die Abgasreinigungsvorrichtung eine Reduktionsmittel-Zuführzeitbestimmungseinrichtung (80) zur Bestimmung einer Zuführzeit des Reduktionsmittels mittels der Reduktionsmittelzuführeinrichtung (10, 14, P2, 16 und 17) auf der Grundlage der erfaßten NOx-Konzentration umfaßt, und dass die Steuereinrichtung (80) die Verschlechterung des NOx-Katalysators (41) auf der Grundlage einer Zeitdauer der von der Reduktionsmittel-Zuführzeitbestimmungseinrichtung (80) bestimmten Zeit, bestimmt.

3. Abgasreinigungsvorrichtung nach Anspruch 2, **dadurch gekennzeichnet, dass**

die Zuführzeitbestimmungseinrichtung (80) die Zuführzeitdauer und die Nicht-Zuführzeitdauer des Reduktionsmittels mittels der Reduktionszuführeinrichtung (10, 14, P2, 16 und 17) sowohl auf der Grundlage der Motorbetriebsbedingung als auch der Aktivierungsbedingung des NOx-Katalysators (41) bestimmt.

4. Abgasreinigungsvorrichtung nach Anspruch 1, **dadurch gekennzeichnet, dass** die Steuereinrichtung (80) die Verschlechterung des NOx-Katalystors (41)

auf der Grundlage einer Änderung der erfaßten NOx-Konzentration nach der Zuführung des Reduktionsmittels bestimmt.

5. Abgasreinigungsvorrichtung nach einem der Ansprüche 1 bis 4, **gekennzeichnet durch** weiter umfassend
eine NOx-Einschlußmengen-Schätzeinrichtung (80) zum Schätzen einer in dem NOx-Katalysator (41) eingeschlossenen NOx-Einschlußmenge, und einer Unterbrechungsdauerbestimmungseinrichtung (80) zur Bestimmung der Zeitdauer der Unterbrechung der Verschlechterungsbestimmung auf der Grundlage der geschätzten NOx-Einschlußmenge.

6. Abgasreinigungsvorrichtung nach Anspruch 1, **dadurch gekennzeichnet, dass**
die Steuereinrichtung (80) die Zuführung des Reduktionsmittels mittels der Reduktionsmittelzuführeinrichtung (10, 14, P2, 16 und 17) auf der Grundlage der erfaßten NOx-Konzentration rückgekoppelt steuert, und dass
die Steuerunterbrechungseinrichtung (80) eine Durchführung der rückgekoppelten Steuerung mittels der Steuereinrichtung (80) für eine Zeitdauer, nachdem die Nicht-Zuführzeitdauer des Reduktionsmittels zur Zuführzeitdauer des Reduktionsmittels zur Zuführzeitdauer des Reduktionsmittels verändert wird, unterbricht, um Reduktionsmittel innerhalb eines bestimmten Intervals zuzuführen.

7. Abgasreinigungsvorrichtung nach Anspruch 6, **dadurch gekennzeichnet, dass**
die Unterbrechung der Rückkopplungssteuerung mittels der Steuerunterbrechungseinrichtung (80) aufgehoben wird, wenn die erfaßte NOx-Konzentration unter einen bestimmten Wert abfällt.

8. Abgasreinigungsvorrichtung nach Anspruch 6, **gekennzeichnet durch** weiter umfassend
eine NOx-Einschlußmenge-Schätzeinrichtung (80) zum Schätzen einer in dem NOx-Katalystor (41) eingeschlossenen NOx-Einschlußmenge, und eine Zeitdauerbestimmungseinrichtung (80) zur Bestimmung der mittels der Steuerunterbrechungseinrichtung (80) gesteuerten Zeitdauer auf der Grundlage der geschätzten NOx-Einschlußmenge.

9. Agasreinigungsvorrichtung nach einem der Ansprüche 1 bis 8,
**dadurch gekennzeichnet, dass**
die Steuereinrichtung (80) einen Verschlechterungszustand des NOx-Katalysators bestimmt, wenn ein Minimalwert der erfaßten NOx-Konzentration einen bestimmten oberen Grenzwert überschreitet.

**Revendications**

1. Dispositif de purification des gaz d'échappement pour un moteur à combustion interne, comprenant :

un catalyseur de NOx (41) prévu dans un système d'échappement (40) du moteur à combustion interne (1) destiné à occlure les NOx lorsque la concentration en composants de réduction dans les gaz d'échappement circulant dans le système d'échappement (40) est faible et à évacuer et à réduire les NOx occlus lorsque la concentration en composants de réduction dans les gaz d'échappement circulant dans le système d'échappement (40) devient élevée ;
un moyen de détection de NOx (75) destiné à détecter la concentration en NOx dans les gaz d'échappement circulant en aval du catalyseur de NOx (41) ;
un moyen de commande (81) destiné à commander une détermination de détérioration du catalyseur de NOx en se basant sur la concentration en NOx détectée ;
un moyen d'alimentation en agent de réduction (10, 14, P2, 16 et 17) destiné à délivrer un agent de réduction dans les gaz d'échappement circulant à travers le catalyseur de NOx ; et
un moyen de décision de période d'alimentation (81) destiné à décider une période d'alimentation en agent de réduction par le moyen d'alimentation en agent de réduction (10, 14, P2, 16 et 17) et une période de non-alimentation en agent de réduction par le moyen d'alimentation en agent de réduction (10, 14, P2, 16 et 17),

**caractérisé par**
un moyen d'interdiction de commande (81) destiné à interdire la détermination de détérioration du catalyseur de NOx par le moyen de commande (81) pendant une période de temps après que la période de non-alimentation en agent de réduction ait été changée en période d'alimentation en agent de réduction, dans lequel
lorsque l'intervalle de temps (P) entre l'alimentation actuelle en agent de réduction et l'alimentation suivante en agent de réduction est plus long qu'une durée prédéterminée, le moyen d'interdiction de commande (80) interdit la détermination de détérioration du catalyseur de NOx pendant une certaine période de temps après que la commande pour l'agent de réduction ait été changée de la commande de non-alimentation à la commande d'alimentation.

2. Dispositif de purification des gaz d'échappement selon la revendication 1, **caractérisé en ce que**
le dispositif de purification des gaz d'échappement comprend un moyen de décision de moment d'alimentation en agent de réduction (80) destiné à décider un moment d'alimentation en agent de réduction par le moyen d'alimentation en agent de réduction (10, 14, P2, 16 et 17) en se basant sur la concentration en NOx détectée ; et

le moyen de commande (80) détermine la détérioration du catalyseur de NOx (41) en se basant sur une période de temps du moment décidé par le moyen de décision de moment d'alimentation en agent de réduction (80).

3. Dispositif de purification des gaz d'échappement selon la revendication 2, **caractérisé en ce que** le moyen de décision de période d'alimentation (80) décide de la période d'alimentation et de la période de non-alimentation en agent de réduction par le moyen d'alimentation en agent de réduction (10, 14, P2, 16 et 17) en se basant sur l'une ou l'autre parmi la condition de fonctionnement du moteur et une condition d'activation du catalyseur de NOx (41).

4. Dispositif de purification des gaz d'échappement selon la revendication 1, **caractérisé en ce que** le moyen de commande (80) détermine la détérioration du catalyseur de NOx (41) en se basant sur un changement de la concentration en NOx détectée après l'alimentation en agent de réduction.

5. Dispositif de purification des gaz d'échappement selon l'une quelconque des revendications 1 à 4, **caractérisé en ce qu'**il comprend de plus:

un moyen d'estimation de quantité d'occlusion de NOx (80) destiné à estimer une quantité d'occlusion de NOx occlus dans le catalyseur de NOx (41) ; et
un moyen de décision de période d'interdiction (80) destiné à décider la période de temps d'interdiction de la détermination de détérioration en se basant sur la quantité d'occlusion de NOx estimée.

6. Dispositif de purification des gaz d'échappement selon la revendication 1, **caractérisé en ce que** le moyen de commande (80) commande par rétroaction l'opération d'alimentation en agent de réduction par le moyen d'alimentation en agent de réduction (10, 14, P2, 16 et 17) en se basant sur la concentration en NOx détectée ; et

le moyen d'interdiction de commande (80) interdit une exécution de la commande de rétroaction par le moyen de commande (80) pendant une période de temps après que la période de non-alimentation en agent de réduction ait été changée en période d'alimentation en agent de réduction de façon à délivrer l'agent de réduction pendant un intervalle prédéterminé.

7. Dispositif de purification des gaz d'échappement selon la revendication 6, **caractérisé en ce que** l'interdiction de la commande de rétroaction par le moyen d'interdiction de commande (80) est libérée lorsque la concentration en NOx détectée tombe au-dessous d'une valeur prédéterminée.

8. Dispositif de purification des gaz d'échappement selon la revendication 6 ou 7, **caractérisé en ce qu'**il comprend de plus :

un moyen d'estimation de quantité d'occlusion de NOx (80) destiné à estimer une quantité d'occlusion de NOx occlus dans le catalyseur de NOx (41) ; et
un moyen de décision de période (80) destiné à décider de la période de temps commandée par le moyen d'interdiction de commande (80) en se basant sur la quantité d'occlusion de NOx estimée.

9. Dispositif de purification des gaz d'échappement selon l'une quelconque des revendications 1 à 8, **caractérisé en ce que** le moyen de commande (80) détermine que le catalyseur de NOx s'est trouvé dans l'état de détérioration si une valeur minimale de concentration en NOx détectée dépasse une valeur limite supérieure prédéterminée.

# FIG. 1

# F I G. 2

# F I G. 3

# FIG. 4

NOx OCCLUSION AMOUNT

Ra    Rb    R100    (HIGH)

# FIG. 5

(HIGH)

NOx CONCENTRATION

Cstd

δ

γ

β

α

t10

t

TIME

# F I G. 6

START

S101

CONFIRM HISTOR OF FUEL SUPPLY AND OPERATION CONDITION

S102

ESTABLISHMENT OF FUEL SUPPLY EXECUTION CONDITION ? — NO

YES

S103

ESTABLISHMENT OF FEEDBACK CONTROL CONDITION ? — NO

YES

S201

FUEL SUPPLY EXECUTION TIMING ? — NO

YES

S202

EXECUTION OF FUEL SUPPLY

S203

ESTABLISHMENT OF DETERIORATION DETERMINATION CONDITION ? — NO

YES

S301

FUEL SUPPLY EXECUTION TIMING ? — NO

YES

S302

EXECUTION OF FUEL SUPPLY

S303

CONFIRM MINIMUM VALUE OF NOx CONCENTRATION

S204

CONFIRM MINIMUM VALUE OF NOx CONCENTRATION

S205

DETERIORATION DETERMINATION

END

# F I G. 7

START

S401 → CONFIRM OPERATION CONDITION

S402 → ESTABLISHMENT OF SOx POISONING RECOVERY PROCEDURE CONDITION ? — NO

YES

S403 → EXECUTION OF SOx POISONING RECOVERY PROCEDURE

S404 → DETERMINATION REGARDING COMPLETE DETERIORATION

END